# EUROPÄISCHE PATENTSCHRIFT

(11) **EP 0 613 259 B1**
(45) Veröffentlichungstag und Bekanntmachung des Hinweises auf die Patenterteilung: **14.10.1998**
(21) Anmeldenummer: 94102019.0
(22) Anmeldetag: 10.02.1994
(51) Int. Cl.: H04B 5/00

(54) **Einrichtung zum kontinuierlichen Informationsaustausch in einem Leckkabelübertragungssystem**
Apparatus for continuous communication in a leaky feeder transmission system
Dispositif pour communication continue dans un système de transmission à câble rayonnant

(30) Priorität: 22.02.1993 DE 4305233
(43) Veröffentlichungstag der Anmeldung: 31.08.1994
(73) Patentinhaber: ALCATEL ALSTHOM COMPAGNIE GENERALE D'ELECTRICITE, 75008 Paris (FR)
(72) Erfinder: Höfgen, Günter, D-70806 Kornwestheim (DE)
(74) Vertreter: Pechhold, Eberhard, Dipl.-Phys.

(56) Entgegenhaltungen:
- SIGNAL + DRAHT, Bd.82, Nr.6, Juni 1990, DARMSTADT DE Seiten 117 - 123, XP248995 J. LEINWEBER 'NBS-TUNNELFUNK FÜR KUNDENDIENSTE'
- SIGNAL + DRAHT, Bd.72, Nr.7/8, Juli 1980, DARMSTADT DE Seiten 143 - 147 F. RIEDISSER ET AL. 'MILLIMETERWELLENTECHNOLOGIE FÜR DAS RAD/SCHIENE-SYSTEM'

## Beschreibung

Die Erfindung betrifft eine Einrichtung zum kontinuierlichen Informationsaustausch zwischen einer Trasse und auf dieser geführten Fahrzeugen.

Eine bekannte derartige Einrichtung ist z.B. die der Steuerung von Zügen dienende Linienzugbeeinflussung (LZB), die einen im Gleis verlegten Linienleiter als streckenseitige Antenne verwendet, mit deren Magnetfeld fahrzeugseitige Antennen induktiv gekoppelt sind. Über den Linienleiter, dessen Kreuzungsstellen auch der Fahrzeugortung dienen, wird ausschließlich Steuerungsinformation übertragen. Zur Übertragung anderer Information, z.B. Zugbahnfunk, Zugtelefon oder Eurosignal werden andere Übertragungsmittel benutzt.

Im Zusammenhang mit Überlegungen zu einer linienleiterfreien, sogenannten Funkzugbeeinflussung wurde auch schon vorgeschlagen, den Linienleiter durch ein Schlitzkabel zu ersetzen und damit ein wesentlich breitbandigeres Übertragungsmittel zur Verfügung zu haben (siehe z.B. Signal + Draht 72 (1980), Heft 7/8, Seite 143, rechte Spalte, mittlerer Absatz).

In einem Aufsatz von J. Leinweber in Signal + Draht 82 (1990), Heft 6, Seite 117 ff ist schließlich ein Schlitzkabel-Funksystem beschrieben, das in Tunnelbereichen eingesetzt werden kann und sowohl der Übertragung von Diensten wie Rundfunk, Zugtelefon und Eurosignal als auch der Übertragung von Informationen eines außerhalb der Tunnelbereiche als Funk-LZB betriebenen Zugsteuerungssystems dienen könnte.

Dieses bekannte Schlitzkabelsystem, das dem Oberbegriff des Patentanspruchs 1 entspricht, benutzt (siehe Bild 5 des o.g. Aufsatzes) ein in mittengespeiste Abschnitte unterteiltes, entlang der Tunnelwand verlegtes Schlitzkabel. Die speisenden Funk-Sender/Empfänger - hier als Tunnelfunkstellen bezeichnet - sind über eine als LWL-Verbindung ausgeführte Modulationsleitung mit einer Kopfstation verbunden, die in ihrer Funktion als Zentralstation mit einer Bereichssteuerzentrale eines Linienzugbeeinflussungssystems verglichen werden kann.

An den Abschnittsübergängen enden die von den Sender/Empfängern der aneinandergrenzenden Abschnitte gespeisten Schlitzkabel. Wegen der im allgemeinen unterschiedlichen Phasenlage der beiden gleichfrequenten HF-Sendesignale in den aneinandergrenzenden Abschnitten dürfen die Schlitzkabelenden einander auch nicht überlappen. Mit Ausfall eines Sender/Empfängers ist somit auf einem gesamten Abschnitt mit in diesem Fall 1500 m Länge die Informationsübertragung unterbrochen.

Der Erfindung liegt die Aufgabe zugrunde, eine Einrichtung der im Oberbegriff des Patentanspruchs 1 beschriebenen Art anzugeben, bei der Ausfälle einzelner Sender/Empfänger keinen Ausfall der Informationsübertragung bewirken.

Diese Aufgabe wird durch die Merkmale des Patentanspruchs 1 gelöst.

Da die Leckkabelabschnitte hier von beiden Seiten aus gespeist werden und auf der Strecke zwischen zwei Ein/Ausspeisepunkten nicht unterbrochen sind, gelangen im Falle eines Ausfalles eines Sender/Empfängers die HF-Signale der beiden benachbarten Sender/Empfänger bis zu dem, dem ausgefallenen Sender/Empfänger zugeordneten Ein/Ausspeisepunkt. Die Leistung der Sender/Empfänger ist dabei so eingestellt, daß der von den Fahrzeugen benötigte minimale Empfangspegel entweder durchgehend erreicht oder nur auf einer kurzen Strecke, die von den Fahrzeugen ohne eine Übertragung neuer Steuerungsinformation überbrückt werden darf, unterschritten wird. Daß bei regulärem Betrieb die an den beiden Enden eines Leckkabelabschnittes eingespeisten gleichfrequenten HF-Signale einander nicht stören, ist durch die zeitlich versetzte Arbeitsweise (Zeitmultiplex) jeweils benachbarter Sender/Empfänger sichergestellt.

Weiterbildungen der Einrichtung nach der Erfindung sind in den Unteransprüchen angegeben.

So gibt Anspruch 2 eine Möglichkeit wieder, wie die Einspeisung eines HF-Sendesignals in zwei Leckkabelabschnitte und die Ausspeisung von Empfangssignalen aus diesen Leckkabelabschnitten bei gleichzeitiger Entkopplung der Leckkabelabschnitte voneinander zweckmäßig gelöst werden kann.

Anspruch 3 gibt ein mögliches Zeitschema für die bidirektionale Übertragung zwischen einer Bereichssteuerzentrale mit dem ihr zugeordneten Bereich und einer Reihe von in diesem Bereich gemeldeten, zu steuernden Fahrzeugen an.

Anspruch 4 betrifft hierzu die Festlegung eines Sendezeitschlitzes für die Sender/Empfänger der Fahrzeuge.

Anhand zweier Figuren soll nun die Einrichtung nach der Erfindung eingehend beschrieben und ihre Arbeitsweise erklärt werden.
- Fig. 1: zeigt ein Übersichtsschaubild
- Fig. 2: zeigt ein Zeitdiagramm für den Informationsaustausch zwischen Trasse und mehreren Fahrzeugen.

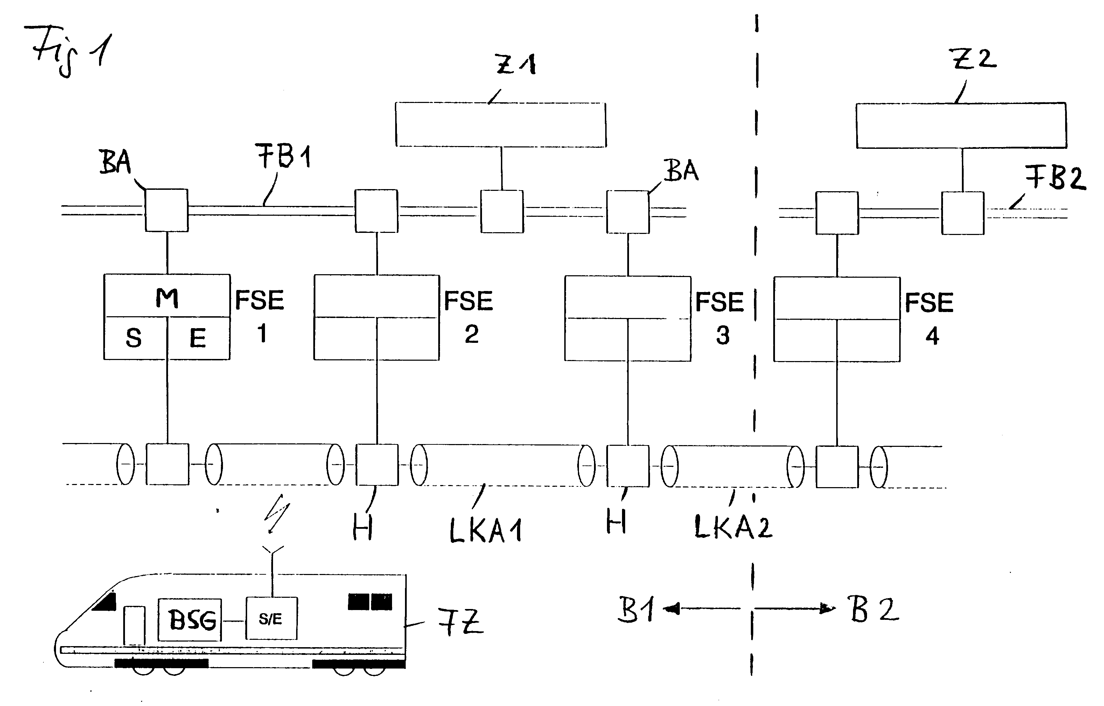

In Fig. 1 ist ein Leckkabel dargestellt, welches in Abschnitte LKA1, LKA2 vorgegebener Länge (von z.B. je 1200 m) unterteilt ist. Die einzelnen Abschnitte sind durch Hybridschaltungen H voneinander getrennt und elektrisch entkoppelt, die gleichzeitig Ein-/Ausspeisepunkte des Leckkabels darstellen. Anschlüsse der Hybridschaltungen sind mit den beiden jeweils angrenzenden Leckkabelabschnitten und außerdem mit dem Senderausgang und dem Empfängereingang eines Funk-Sender/Empfängers FSE1...FSE4 verbunden. Jeder Sender/Empfänger besitzt neben einem HF-Sender S und einem HF-Empfänger E ein Modem M, über das er mit Hilfe von Busankopplungsschaltungen BA an einen Feldbus FB1, FB2 einer Bereichssteuerzentrale, Z1, Z2 angeschlossen ist.

Von den trassenseitigen Sender/Empfängern in das Leckkabel eingespeiste, vom Leckkabel abgestrahlte HF-Signale werden von Sender/Empfängern S/E von im Bereich befindlichen, zu steuernden Fahrzeugen FZ aufgenommen und Bordsteuergeräten BSG zugeleitet. Umgekehrt gibt jedes Bordsteuergerät für die Bereichssteuerzentrale bestimmte Signale über den Sender/Empfänger des jeweiligen Fahrzeugs auf das Leckkabel aus. Der Fahrzeugsender arbeitet dabei auf einer von der Sendefrequenz der trassenseitigen Sender/Empfänger verschiedenen Hochfrequenz.

Alle trassenseitigen Sender/Empfänger arbeiten auf derselben Hochfrequenz und verwenden gruppenweise dieselbe Steuerinformation zu deren Modulation. Die Steuerinformation wird dabei dem Feldbus FB1 entnommen, der z.B. ein Lichtwellenleiter sein kann und von der dem Bereich zugeordneten Bereichssteuerzentrale Z1, Z2 gespeist wird.

Über den Feldbus lassen sich die einzelnen trassenseitigen Funk-Sender/Empfänger gruppenweise synchron entsprechend einem Zeitrahmen betreiben. Wird eine Aufteilung der Sender/Empfänger eines Bereiches in zwei gleichgroße Gruppen vorgenommen, so senden im ersten Zeitschlitz gleichzeitig jeweils die Sender/Empfänger FSE1, 3, 5, 7 usw. einer ersten Gruppe, im zweiten Zeitschlitz dagegen die Sender/Empfänger FSE 2, 4, 6 usw. der zweiten Gruppe. Im dritten Zeitschlitz sind wieder die Sender/Empfänger der ersten Gruppe an der Reihe. Empfangen wird jeweils in den Zeitschlitzen, in denen nicht gesendet wird.

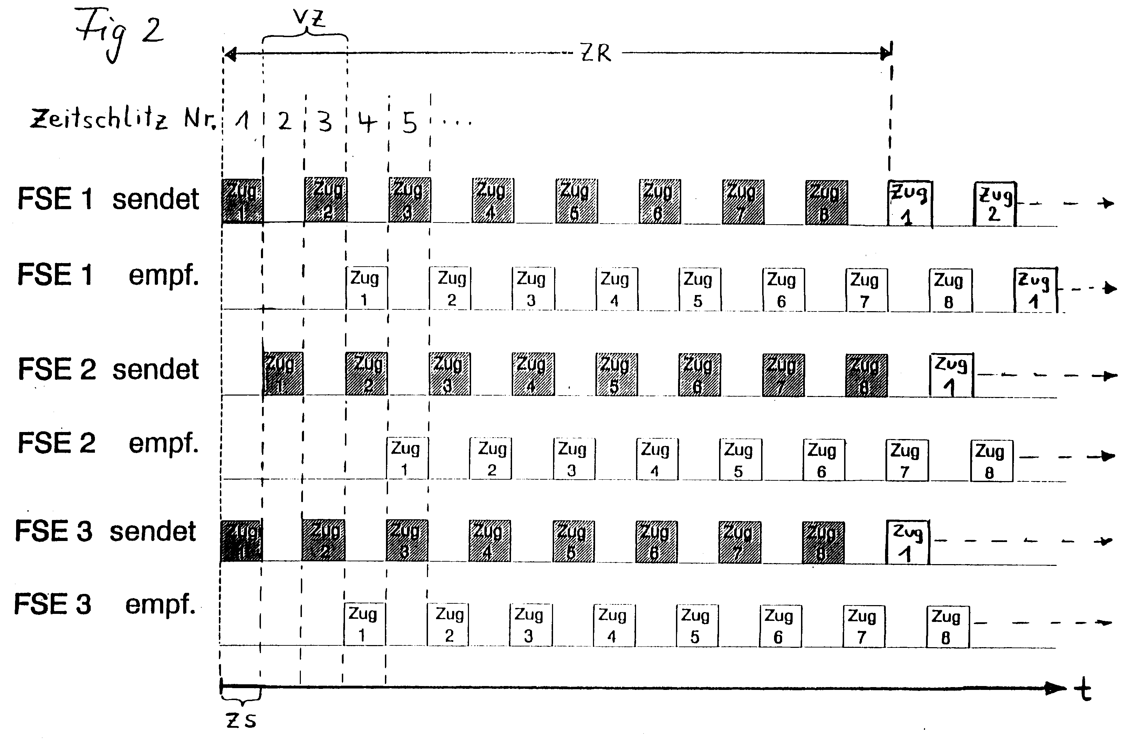

In Fig. 2 ist dies graphisch dargestellt:
Über der Zeitachse t sind hier Zeitschlitze aufgetragen, die von drei Sender/Empfängern FSE1-FSE3 zum Senden oder zum Empfang genutzt werden. Von links nach rechts senden im ersten Zeitschlitz ZS FSE1 und FSE3 (und alle weiteren, ungeradzahligen Sender/Empfänger), im zweiten Zeitschlitz sendet FSE2 (und alle weiteren geradzahligen Sender/Empfänger). Im dritten Zeitschlitz senden wieder FSE1 und FSE3 usw.. Bereits im zweiten Zeitschlitz könnten die dann nicht sendenden Sender/Empfänger FSE1 und FSE3 Information von den Fahrzeugen empfangen. Dies wäre jedoch wenig sinnvoll, da die Bordsteuergeräte der Fahrzeuge zur Verarbeitung der empfangenen Information - z.B. von Steuerdatentelegrammen, wie sie bei der Linienzugbeeinflussung üblich sind - Zeit benötigen und eine Rückmeldung noch nicht so frühzeitig abgeben könnten. In Fig. 2 empfangen die Sender/Empfänger FSE1 und FSE3 deshalb erstmals im Zeitschlitz 4. Damit verbleibt dem Fahrzeug - in diesem Falle einem Zug 1 - eine Verarbeitungszeit VZ von der Dauer zweier Zeitschlitze bis zur Abgabe eines Antworttelegrammes.

Die in einem Zeitrahmen ZR zur Verfügung stehenden Zeitschlitze müssen im Falle, daß sich mehrere Fahrzeuge in einem Bereich befinden, auf diese Fahrzeuge aufgeteilt werden. Zumindest ein Zeitschlitz muß dabei jedoch zunächst frei bleiben, um die Aufnahme neuer Fahrzeuge aus Nachbarbereichen oder neu in Betrieb gehender Fahrzeuge zu ermöglichen. Enthält der Zeitrahmen, wie in Fig. 2, 16 Zeitschlitze, so können 8 Fahrzeuge je einmal innerhalb eines Zeitrahmens aufgerufen werden. Innerhalb desselben Zeitrahmens kann von jedem dieser Fahrzeuge ein Antworttelegramm abgesetzt werden. Die Fahrzeuge können sich dabei auch auf verschiedenen Gleisen einer mehrgleisigen Eisenbahnstrecke befinden.

Die Fahrzeuge erkennen für sie bestimmte Informationen - z.B. ein für sie bestimmtes Datentelegramm - an einer von der Bereichssteuerzentrale mitübertragenen Kennung, die auch im Bordsteuergerät gespeichert ist. Eine fest vorgegebene, ebenfalls gespeicherte Zeitspanne - in Fig. 2 z.B. zwei Zeitschlitzbreiten - nach Empfang des mit der Kennung versehenen Datentelegrammes beginnt das Bordsteuergerät mit der Ausgabe eines Antworttelegrammes, das wiederum die Fahrzeugkennung enthält und von der Bereichssteuerzentrale als von diesem Fahrzeug stammend identifiziert wird. Auf diese Weise wird ein bidirektionaler Datenverkehr mit jedem im Bereich befindlichen Fahrzeug sichergestellt.

In der Mitte eines Leckkabelabschnitts nimmt ein Fahrzeug in aufeinanderfolgenden Zeitschlitzen Signale der trassenseitigen Sendefrequenz auf. Da nur jeweils eines der Signale ausgewertet werden und zur Ausgabe eines Antworttelegrammes führen soll, muß eine Entscheidung getroffen werden, welches Signal dies ist. Es ist sinnvoll, für diese Entscheidung den Empfangspegel heranzuziehen und jeweils das stärker einfallende Signal auszuwerten.

An Bereichsübergängen - in Fig. 1 z.B. im Leckkabelabschnitt LKA2 - muß eine Steuerungsübergabe zwischen den benachbarten Bereichssteuerzentralen vorgenommen werden. Diejenige Bereichssteuerzentrale, die die weitere Steuerung übernehmen soll, wird hierzu z.B. von der für den in Fahrtrichtung zurückliegenden Bereich zuständigen Bereichssteuerzentrale von einer bevorstehenden Fahrzeugübergabe in Kenntnis gesetzt. Sie erhält z.B. die Kennung des aufzunehmenden Fahrzeugs mitgeteilt und ruft das Fahrzeug in einem bisher nicht belegten Zeitschlitz auf.

Um auf eine derart einfache Weise eine Fahrzeugübergabe vornehmen zu können, müssen benachbarte Bereichssteuerzentralen synchron arbeiten und sicherstellen, daß sich das Schema der Zeitschlitzbelegung aufeinanderfolgender Sender/Empfänger-Gruppen über den Bereichsübergang hinaus kontinuierlich fortsetzt. Die Synchronisation der Bereichssteuerzentralen kann dabei über eine Datenverbindung oder über einen externen Zeitgeber (z.B. Satelliten-Zeitbasis) erfolgen.

Um zu wissen, welches Fahrzeug einen Bereich demnächst verläßt, müssen der Bereichssteuerzentrale die Orte der einzelnen Fahrzeuge bekannt sein. Da das Leckkabel, im Gegensatz zum Linienleiter, keine genauen Ortungsbezugspunkte liefert - die Punkte gleichen Empfangspegels in der Mitte der Leckkabelabschnitte sind nicht genau genug feststellbar - müssen zusätzliche Ortungsbezugspunkte, zumindest an den Bereichsübergängen, geschaffen werden. Es bieten sich hierzu z.B. aus anderen Fahrzeugsteuerungssystemen bekannte Balisen an. Die Feinortung zwischen Ortungsbezugspunkten kann, wie bei der Linienzugbeeinflussung, mit Hilfe von Radumdrehungszählern und Beschleunigungsmessern ausgeführt werden.

## Patentansprüche

1. Einrichtung zum kontinuierlichen Informationsaustausch zwischen einer Trasse und auf dieser verkehrenden, mit Funk-Sender/Empfängern und Bordsteuergeräten ausgerüsteten Fahrzeugen, mit einem entlang der Trasse geführten, in Abschnitte unterteilten Leckkabel, das in vorgegebenen Abständen Ein/Ausspeisepunkte aufweist, an denen von trassenseitigen Funk-Sende/Empfängern, die über eine Datenleitung mit einer Bereichssteuerzentrale verbunden sind, für die Fahrzeuge bestimmte Sendesignale einer ersten Hochfrequenz in das Leckkabel eingespeist und von den Fahrzeugen her empfangene, für die Bereichssteuerzentrale bestimmte Empfangssignale einer zweiten Hochfrequenz aus dem Leckkabel ausgespeist werden, **dadurch gekennzeichnet,** daß die Leckkabelabschnitte (LKA1, LKA2) jeweils zwischen zwei Ein/Ausspeisepunkten angeordnet sind und von beiden Seiten aus, abwechselnd gespeist werden, daß hierzu die trassenseitigen Sender/Empfänger (FSE1.. .FSE3) in mindestens zwei Gruppen unterteilt sind, welche in verschiedenen, aufeinanderfolgenden Zeitabschnitten senden und die an aufeinanderfolgenden Ein/Ausspeisepunkten entlang der Trasse angeordneten Sender/Empfänger abwechselnd der einen oder der anderen Gruppe angehören, und daß an jedem Ein/Ausspeisepunkt jeweils dasselbe Sendesignal in beide dort aneinandergrenzenden Leckkabelabschnitte eingespeist wird.

2. Einrichtung nach Anspruch 1, dadurch gekennzeichnet, daß die Einspeisung von Sendesignalen in die Leckkabelabschnitte sowie die Ausspeisung der Empfangssignale aus den Leckkabelabschnitten an den Ein/Ausspeisepunkten jeweils über ein gemeinsames Hybrid (H) erfolgt.

3. Einrichtung nach Anspruch 1 oder Anspruch 2, dadurch gekennzeichnet, daß den trassenseitigen Funk-Sender/Empfängern ein Zeitrahmen (ZR) mit einer Anzahl von Zeitschlitzen (ZS) vorgegeben ist, daß die Gruppen von Sender/Empfängern die einzelnen Zeitschlitze zyklisch aufeinanderfolgend zum Senden belegen und in nicht zum Senden belegten Zeitschlitzen von den Fahrzeugen (FZ) gesendete Signale empfangen, daß die von den einzelnen Gruppen von Sender/Empfängern zum Senden belegten Zeitschlitze in zyklischer Reihenfolge nacheinander den einzelnen, im Bereich gemeldeten Fahrzeugen zugeordnet und mit für die jeweiligen Fahrzeuge bestimmter Steuerungsinformation belegt werden und daß den Bordsteuergeräten (BSG) der Fahrzeuge die Dauer der Zeitschlitze bekannt ist und jedes Fahrzeug, ausgehend von Beginn oder Ende eines ihm zugeordneten Zeitschlitzes einen Zeitschlitz festlegt, in dem es über seinen Sender/Empfänger (S/E) für die Bereichssteuerzentrale (Z1, Z2) bestimmte Signale aussendet.

4. Einrichtung nach Anspruch 3, dadurch gekennzeichnet, daß die Zeitspanne (VZ) zwischen dem Ende eines einem Fahrzeug zugeordneten Zeitschlitzes und dem Beginn eines vom Bordsteuergerät dieses Fahrzeuges für das Aussenden von für die Bereichssteuerzentrale bestimmten Signalen festgelegten Zeitschlitzes nach der für die Bearbeitung der vom Fahrzeug empfangenen Steuerungsinformation erforderlichen Zeit bemessen ist.

## Claims

1. System for continuous information exchange between a track and vehicles running thereon and equipped with radio transceivers and on-board controllers, comprising a leaky cable which is laid along the track, is divided into sections, and has feed-in/feed-out points at predetermined intervals at which trackside radio transceivers connected by a data line to an area control centre feed transmitted signals of a first radio frequency intended for the vehicles into the leaky cable and feed incoming signals of a second radio frequency received from the vehicles and intended for the area control centre out of the leaky cable, characterized in that each of the leaky-cable sections (LKA1, LKA2) is disposed between two feed-in/feed-out points and is fed alternately from both sides, in that, to this end, the trackside transceivers (FSE1...FSE3) are divided into at least two groups which transmit in different, successive time intervals and the transceivers, disposed along the track at successive feed-in/feed-out points, belong alternately to one group or the other, and in that, at each feed-in/feed-out point, the same transmitted signal is in each case fed into both leaky-cable sections meeting there.

2. System according to Claim 1, characterized in that the feeding of transmitted signals into the leaky-cable sections and the feeding of the received signals out of the leaky-cable sections at the respective feed-in/feed-out points takes place via a common hybrid (H).

3. System according to Claim 1 or 2, characterized in that a time frame (ZR) with a number of time slots (ZS) is provided for the trackside radio transceivers, in that the groups of transceivers occupy the individual time slots for transmission in cyclic succession, and receive signals transmitted by the vehicles (FZ) in time slots not occupied for transmission, in that the time slots occupied by the individual groups of transceivers for transmission are assigned cyclically and sequentially to the individual vehicles reported in the area, and are occupied by control information intended for the respective vehicles, and in that the duration of the time slots is known to the on-board controllers (BSG) of the vehicles, and each vehicle, starting from the beginning or end of a time slot assigned to it, defines a time slot in which it transmits, via its transceiver (S/E), signals intended for the area control centre (Z1, Z2).

4. System according to Claim 3, characterized in that the time interval (VZ) between the end of a time slot assigned to a vehicle and the beginning of a time slot defined by the on-board controller of said vehicle for the transmission of signals intended for the area control centre is adapted to the time required to process the control information received by the vehicle.

## Revendications

1. Dispositif pour un échange d'informations continu entre un tracé et des véhicules équipés d'émetteurs/récepteurs radio et d'appareils de commande de bord circulant sur ce tracé, avec un câble rayonnant suivant le tracé et divisé en segments qui présente des points d'arrivée/ départ d'alimentation, où des signaux d'émission destinés aux véhicules et provenant des émetteurs/ récepteurs radio sur le tracé, qui sont raccordés par une ligne de données à une centrale de commande de secteur, sont entrés dans le câble rayonnant à une première haute fréquence, et où des signaux de réception reçus depuis les véhicules et destinés à la centrale de commande de secteur partent du câble rayonnant à une deuxième haute fréquence, caractérisé en ce que les segments de câble rayonnant (LKA1, LKA2) sont respectivement disposés entre deux points d'arrivée/départ d'alimentation et sont alimentés alternativement des deux côtés, en ce qu'à cet effet, les émetteurs/récepteurs sur le tracé (FSE1 ... FSE3) sont divisés au moins en deux groupes qui émettent dans des intervalles consécutifs différents, et en ce que les émetteurs/récepteurs situés le long du tracé au niveau de points d'arrivée/ départ d'alimentation consécutifs appartiennent alternativement à l'un ou l'autre groupe, et en ce qu'à chaque point d'arrivée/ départ d'alimentation, le même signal d'émission est respectivement alimenté dans les deux segments de câble rayonnant adjacents à cet endroit.

2. Dispositif selon la revendication 1, caractérisé en ce que l'arrivée de signaux d'émission dans les segments de câble rayonnant, ainsi que le départ de signaux de réception à partir des segments de câble rayonnant aux points d'arrivée/ départ d'alimentation s'effectuent respectivement par l'intermédiaire d'une hybride (H) commune.

3. Dispositif selon la revendication 1 ou la revendication 2, caractérisé en ce qu'une trame temporelle (ZR) avec une multitude de tranches de temps (ZS) est prédéfinie pour les émetteurs/ récepteurs radio sur le tracé, en ce que les groupes d'émetteurs/récepteurs occupent les tranches de temps individuelles de façon cyclique les unes après les autres pour émettre et en ce qu'ils reçoivent des signaux émis par les véhicules (FZ) au cours des tranches de temps non occupées pour l'émission, en ce que les tranches de temps occupées par les groupes individuels d'émetteurs/récepteurs pour l'émission sont allouées dans un ordre cyclique les unes après les autres aux véhicules individuels signalés dans le secteur et occupées par des informations de commande destinées aux véhicules respectifs, et en ce que les appareils de commande de bord (BSG) des véhicules sont informés de la durée des tranches de temps et en ce que chaque véhicule détermine une tranche de temps en partant du début ou de la fin d'une tranche de temps qui lui est allouée, en émettant des signaux spécifiques par l'intermédiaire de son émetteur/ récepteur (S/E) destinés à la centrale de commande de secteur (Z1, Z2).

4. Dispositif selon la revendication 3, caractérisé en ce que la durée (VZ) entre la fin d'une tranche de temps allouée à un véhicule et le début d'une tranche de temps fixée par l'appareil de commande de bord de ce véhicule pour l'émission des signaux destinés à la centrale de commande de secteur est calculée en fonction du temps nécessaire pour le traitement des informations de commande reçues depuis le véhicule.
